# EUROPEAN PATENT APPLICATION

(11) **EP 3 273 249 A1**
(43) Date of publication of application: **24.01.2018**
(21) Application number: 16764995.3
(22) Date of filing: 16.03.2016
(51) Int. Cl.: G01N 35/00, G01N 35/02, G01N 35/04

(54) **ANALYTE MEASUREMENT SYSTEM AND TRAY-IDENTIFYING INFORMATION SEARCH METHOD**

(30) Priority: 18.03.2015 JP 2015054691
(71) Applicant: Sysmex Corporation, Kobe-shi, Hyogo 651-0073 (JP)
(72) Inventor: TATSUTANI Hiroo, Kobe-shi Hyogo 651-0073 (JP); OHMAE Yuichiro, Kobe-shi Hyogo 651-0073 (JP)
(74) Representative: Hoffmann Eitle
(86) International application number: PCT/JP2016/058251
(87) International publication number: WO 2016/148166

(57) **Abstract**

[PROBLEMS]

Provided are a sample measurement system and a method of retrieving tray identification information enabling a user to retrieve a target rack easily.

[MEANS TO SOLVE THE PROBLEMS]

A measurement unit 10 measures a sample stored in a sample container. A transport unit 20 transports racks 60 each capable of holding multiple sample containers via the measurement unit 10. A rack transport-in/transport-out unit 30 detachably provided with a tray in which multiple racks 60 can be set receives racks transported from the measurement unit 10 by the transport unit 20, and sets the racks 60 in the tray. A hard disk 504 stores a sample ID for identifying a sample, a rack ID for identifying a rack, and a tray ID for identifying a tray in association with each other. When receiving input of a sample ID or rack ID, a controller 500 performs control to display the tray ID stored in association with the sample ID or rack ID on a display part 509.

## Description

### TECHNICAL FIELD

The present invention relates to a sample measurement system and a method of retrieving tray identification information.

### TECHNICAL BACKGROUND

Patent Literature 1 discloses a rack transport system with which a rack holding multiple sample containers is transported to a dispensing mechanism to conduct measurement. The rack transport system described in Patent Literature 1 includes a rack tray set part in which a rack tray holding multiple racks arranged is placed; a rack collector in which an empty rack tray is placed to collect a rack holding a sample container after completion of dispensing; and a transport mechanism that transports the rack from the rack tray set part to the dispensing mechanism and then transports the rack to the rack collector after the sample is dispensed from the sample container. A rack tray is detachably attached to the rack tray set part and the rack collector.

### PRIOR ART LITERATURE

Patent Literature 1: Japanese Patent Application Publication No. 2010-139371

### SUMMARY

### PROBLEMS TO BE SOLVED BY THE INVENTION

In general, it is ordinary practice in a testing organization that a rack holding a sample for which measurement is completed is stored in a storage chamber for a predetermined period for re-measurement of the same item or measurement of another item. In such a testing organization, when re-measurement of the same item or measurement of another item is needed for a sample for which measurement is completed, a rack which holds the target sample has to be retrieved and set in a measurement apparatus again. Some large testing organizations demand that a great number of samples be efficiently tested. To meet such a demand, it is effective to apply the technique described in Patent Literature 1 to a system that supplies racks from multiple rack tray set parts to multiple measurement apparatuses, and collects the racks by multiple rack collectors. When multiple rack tray set parts and multiple rack collectors are used in this manner, multiple racks transported from the rack tray set part may not be collected by a tray in the rack collector in a desired order, or the multiple racks transported from a rack tray set part may be distributed and collected by trays of multiple rack collectors. In these cases, if these trays are collectively stored in a storage chamber, it takes time and effort to find out a target rack in the storage chamber.

### MEANS TO SOLVE THE PROBLEMS

A sample measurement system of the present disclosure may include a measurement unit, a transport unit, a collection unit, a storage, an input part, a display part, and a controller. The measurement unit measures a sample stored in a sample container. The transport unit transports a rack capable of holding multiple sample containers via the measurement unit. The collection unit is detachably provided with a tray in which multiple racks are settable, collects a rack transported from the measurement unit by the transport unit, and sets the racks in the tray. The storage stores sample identification information for identifying a sample, rack identification information for identifying a rack, and tray identification information for identifying a tray in association with each other. When the input part receives input of the sample identification information or rack identification information, the controller controls the display part so that the tray information stored in association with the inputted sample identification information or rack identification information is displayed.

A method of retrieving tray identification information in the present disclosure may retrieve tray identification information for identifying a tray which is detachably set on a collection unit and in which a rack is set, the rack being transported to the collection unit via a measurement unit for measuring a sample stored in a sample container. The method of retrieving tray identification information includes receiving input of sample identification information for identifying the sample or rack identification information for identifying the rack as a retrieval condition; retrieving the tray identification information associated with the received sample identification information or rack identification information; and displaying the retrieved tray identification information.

### ADVANTAGEOUS EFFECTS OF THE INVENTION

According to the present invention, it is possible for a user to retrieve a target rack easily.

### BRIEF DESCRIPTION OF DRAWINGS

Fig. 1 is a plan view illustrating a configuration of a measurement system according to one or more embodiments;
Fig. 2A is a front view illustrating an example of a configuration of a rack;
Fig. 2B is a perspective view illustrating another example of a configuration of a rack;
Fig. 3 is a plan view illustrating a configuration of a rack transport-in/transport-out unit;
Fig. 4 is a perspective view illustrating a configuration of a rack transport-in/transport-out unit;
Fig. 5 is a perspective view illustrating a configuration of a tray;
Fig. 6 is a block diagram illustrating a configuration of a control unit;
Fig. 7 is a diagram illustrating a configuration of a sample information database;
Fig. 8A is a flowchart illustrating operational steps of a measurement system;
Fig. 8B is a flowchart illustrating operational steps of a measurement system;
Fig. 9A is a plan view illustrating setting of a rack in a rack transport-in/transport-out unit;
Fig. 9B is a plan view illustrating transfer of a rack in a rack transport-in/transport-out unit;
Fig. 9C is a plan view illustrating setting of a rack in a rack transport-in/transport-out unit;
Fig. 9D is a plan view illustrating setting of a rack in a rack transport-in/transport-out unit;
Fig. 9E is a plan view illustrating setting of a rack in a rack transport-in/transport-out unit;
Fig. 10A is a flowchart illustrating operational steps of a rack transport-in/transport-out unit;
Fig. 10B is a flowchart illustrating operational steps of a rack transport-in/transport-out unit;
Fig. 11 is a flowchart illustrating steps of rack information retrieval processing;
Fig. 12 is a diagram illustrating a system monitor screen;
Fig. 13 is a diagram illustrating a retrieval method selection screen;
Fig. 14 is a diagram illustrating a first retrieval condition input screen;
Fig. 15 is a diagram illustrating a second retrieval condition input screen; and
Fig. 16 is a diagram illustrating a retrieval result screen.

### DESCRIPTION OF THE EMODIMENTS

Hereinafter, embodiments are described with reference to the drawings.

### <Configuration of Sample Measurement System>

In this embodiment, a sample measurement system for measuring an antigen or an antibody included in a serum obtained from a subject is described.

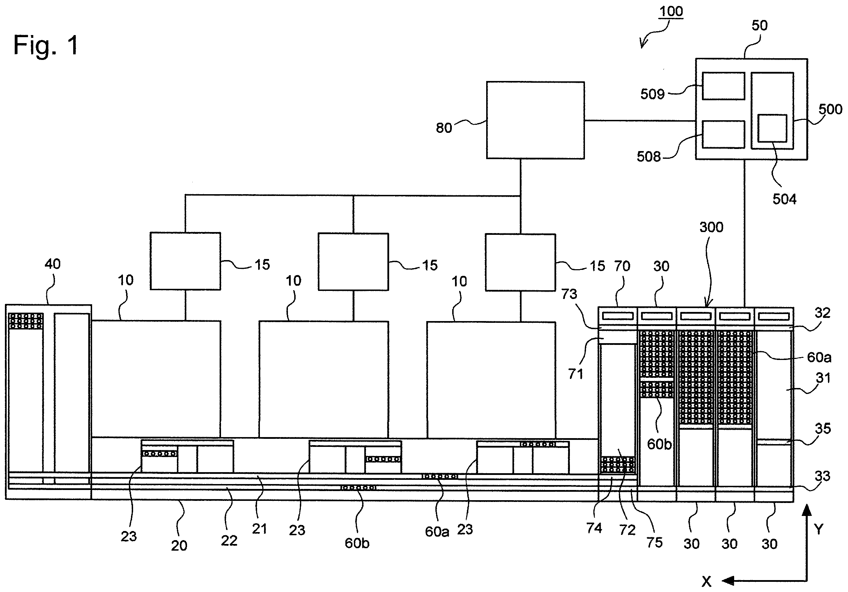

The configuration of the sample measurement system is described with reference to Fig. 1. Sample measurement system 100 includes measurement unit 10, information process unit 15, transport unit 20, rack transport-in/transport-out unit 30, retest standby unit 40, and control unit 50.

Rack transport-in/transport-out device 300 includes multiple rack transport-in/transport-out units 30 and one bar code read unit 70. Rack transport-in/transport-out device 300 is used by a user to put, in sample measurement system 100, rack (hereinafter referred to as a "pre-measurement rack") 60a holding sample containers that store samples before measurement. Rack transport-in/transport-out device 300 is also used by a user to collect, from sample measurement system 100, rack (hereinafter referred to as a "post-measurement rack") 60b holding sample containers that store samples after measurement.

Rack transport-in/transport-out device 300 and retest standby unit 40 are set apart from each other on a horizontal floor in a facility of a user. Rack transport-in/transport-out device 300 and retest standby unit 40 are coupled by elongated transport unit 20. In the following description, the direction from Rack transport-in/transport-out device 300 to retest standby unit 40 is referred to as the "supply direction", and the direction from retest standby unit 40 to Rack transport-in/transport-out device 300 is referred to as the "return direction". The direction perpendicular to the supply direction and the return direction is referred to as the "front-and-back direction". The direction perpendicular to all of the supply direction, the return direction, and the front-and-back direction is referred to as the "up and down direction".

Sample measurement system 100 includes three measurement units 10 and three information process units 15. Three measurement units 10 are arranged alongside forward of transport unit 20 in the supply direction.

Measurement unit 10 is an immunity measurement unit for measuring a sample of serum using Chemiluminescent Enzyme Immunoassay (CLEIA), and testing various items such as hepatitis B, hepatitis C, a tumor marker, and thyroid hormone. Measurement unit 10 includes an aspirator for aspirating a sample, and aspirates a sample stored in a sample container which is a test tube. Measurement unit 10 mixes the aspirated sample and a reagent to prepare a measurement specimen, and measures the sample by optically measuring the measurement specimen.

Measurement unit 10 is not limited to an immunity measurement unit, and may be another measurement unit. For instance, measurement unit 10 may be a blood cell measurement unit that classifies and counts the blood cells contained in the entire blood sample using a flow cytometry method. Measurement unit 10 may be a blood coagulation measurement unit for testing items related to a blood coagulation function using a coagulation method, a synthetic substrate method, or an immunonephelometry. Measurement unit 10 may be a urine particle measurement unit that measures particles contained in a urine sample by a flow cytometry method or analysis of microscopic images. Measurement unit 10 may be a biochemical measurement unit for measuring a serum or a urine specimen using a colorimetric measurement method, and testing measurement items related to sugar, cholesterol, protein, enzyme and others.

The number of measurement units 10 is not limited to three. Multiple measurement units 10 of the same type may be set, or multiple types of measurement units may be set.

Information process unit 15 is formed of a personal computer. Three information process units 15 correspond to three measurement units 10 in a one-on-one manner. In other words, one information process unit 15 is connected to one measurement unit 10.

Each measurement unit 10 transmits measurement data obtained by measuring a sample to corresponding information process unit 15. Information process unit 15 analyzes the measurement data, and generates and displays a result of the analysis. Information process unit 15 is connected to host computer 80. Host computer 80 stores an order for each sample, and transmits an order according to a request from information process unit 15. Upon receiving an order, information process unit 15 controls the measurement unit to perform sample measurement for the measurement items specified in the order. When a result of analysis is obtained, information process unit 15 transmits the result of analysis to host computer 80. Host computer 80 stores the result of analysis received from information process unit 15 in a database.

Transport unit 20 transports pre-measurement rack 60a from rack transport-in/transport-out unit 30 to measurement unit 10 in a longitudinal direction, and transports post-measurement rack 60b to rack transport-in/transport-out unit 30.

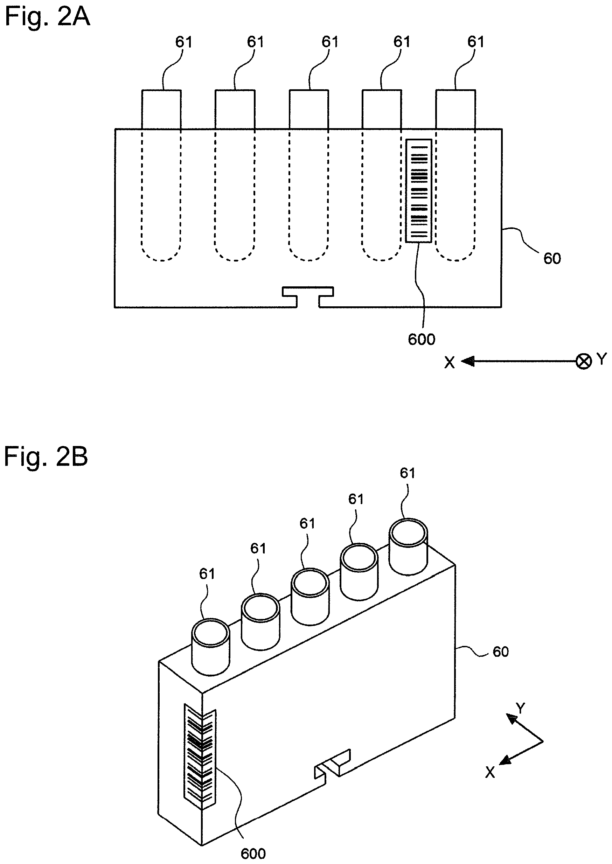

As illustrated in Fig. 2A, rack 60 holds five sample containers 61 which are test tubes arranged on a line in a longitudinal direction. Hereinafter, the longitudinal direction of rack 60 is referred to as "X direction ", and the transverse direction of rack 60 is referred to as "Y direction ".

Bar code label 600, which is a rack identifier, is affixed to rack 60. A bar code (hereinafter referred to as a "rack bar code") obtained by encoding a rack ID that is rack identification information is printed on bar code label 600.

As illustrated in Fig. 2A, bar code label 600 is affixed to one face (hereinafter referred to as a "front face") of rack 60 perpendicular to Y direction. As illustrated in Fig. 2B, bar code label 600 may be affixed to one face of rack 60 perpendicular to X direction and the front face.

Referring to Fig. 1 again, transport unit 20 includes first transporter 21 for transporting pre-measurement rack 60a to measurement unit 10, and second transporter 22 for returning post-measurement rack 60b. First transporter 21 and second transporter 22 are elongated conveyor belts extending in parallel. First transporter 21 transports pre-measurement rack 60a in the supply direction. Second transporter 22 transports post-measurement rack 60b in the return direction. It is to be noted that first transporter 21 and second transporter 22 are not limited to conveyor belts. First transporter 21 and second transporter 22 may transport rack 60 by pushing rack 60 using a member such as a lever, or may transport rack 60 by moving, with a claw-shaped member engaged with rack 60.

Transport unit 20 is provided with measurement path 23 at each of portions corresponding to measurement units 10. Measurement path 23 is a transfer path for rack 60, and is connected to first transporter 21. After pre-measurement rack 60a is transported by first transporter 21 to the vicinity of measurement unit 10 at a transport destination, pre-measurement rack 60a is pulled to measurement path 23 corresponding to the transport destination. Measurement unit 10 aspirates a sample from sample container 61 held in pre-measurement rack 60a pulled to measurement path 23, and performs measurement. Post-measurement rack 60b holding all sample containers 61 from which respective samples have been aspirated is transferred from measurement path 23 to first transporter 21, and is transported by first transporter 21 in the supply direction.

Rack transport-in/transport-out unit 30 is a collection unit for collecting post-measurement rack 60b. Rack transport-in/transport-out unit 30 is also a put-in unit in which a user put pre-measurement rack 60a. Rack transport-in/transport-out unit 30 is connectable to other rack transport-in/transport-out units 30 in the supply direction and the return direction. Rack transport-in/transport-out device 300 may include any number of rack transport-in/transport-out units 30. In addition, bar code read unit 70 can be connected to rack transport-in/transport-out unit 30 in the supply direction. Hereinafter, any unit connected to the upstream side of a unit in the supply direction is referred to as a unit connected to a preceding-stage, and any unit connected to the downstream side of a unit in the supply direction is referred to as a unit connected to a subsequent-stage.

Rack transport-in/transport-out unit 30 includes setting part 31 in which multiple racks 60 can be set on a line in the transverse direction of racks 60, that is, Y direction; transport-out part 32 that is disposed at one end side of setting part 31, and that sends rack 60 from setting part 31; and transport-in part 33 that is disposed at the other end side of setting part 31, and that sends rack 60 to setting part 31. In other words, rack transport-in/transport-out unit 30 can send pre-measurement rack 60a from one end side to first transporter 21, and can receive post-measurement rack 60b, transported by second transporter 22, from the other end side.

Setting part 31 has an elongated rectangular shape in the front-and-back direction in a plan view. Setting part 31 is formed flatly to facilitate setting of racks 60. Setting part 31 is provided on the upper surface of rack transport-in/transport-out unit 30. The width of setting part 31 is slightly larger than the length of each rack 60, and multiple racks 60 can be placed alongside in setting part 31 in the front-and-back direction. That is, in a state where racks 60 are set in setting part 31, Y direction aligns with the front-and-back direction, and X direction aligns with the supply direction and the return direction.

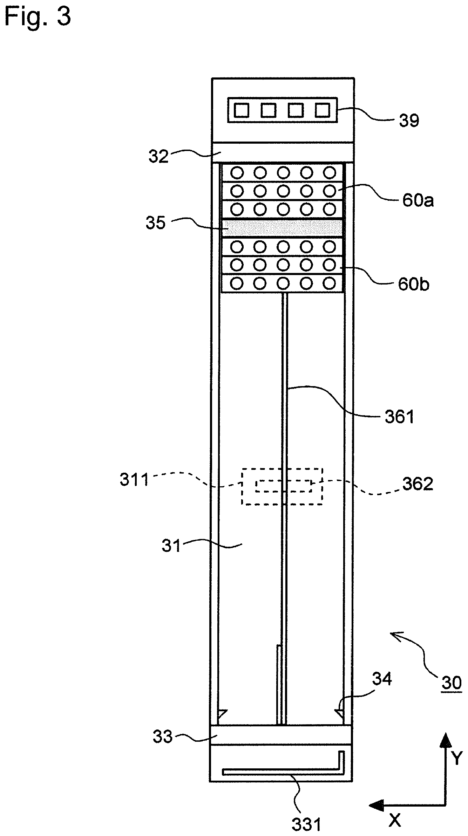

The configuration of rack transport-in/transport-out unit 30 is described in more detail with reference to Fig. 3. Transport-out part 32 is provided forward of setting part 31, and transport-in part 33 is provided rearward of setting part 31. Setting part 31 is provided with a transfer unit 34 for transferring rack 60 forward. Transfer unit 34 is a claw-shaped member that can project from both sides of setting part 31, and that moves in Y direction in a projecting state. Transfer unit 34 is engaged with the both sides of rack 60 and moves forward, thereby transferring rack 60 forward.

Transfer prevention part 35 for preventing transfer of post-measurement rack 60b to transport-out part 32 is attached to setting part 31. Transfer prevention part 35 is attached to setting part 31 so as to be movable in Y direction in setting part 31.

Multiple racks 60 can be set in the front and back areas which interpose transfer prevention part 35 of setting part 31. Transfer unit 34 transfers multiple racks 60 and transfer prevention part 35 integrally. When transfer unit 34 transfers one rack 60 forward, each rack 60 and transfer prevention part 35 forward of the one rack 60 are pushed and transferred forward by the one rack 60 which is directly transferred by transfer unit 34. Similarly, when transfer unit 34 transfers transfer prevention part 35 forward, each rack 60 forward of transfer prevention part 35 is pushed and transferred forward by transfer prevention part 35.

Transport-in part 33 and transport-out part 32 are each a conveyor belt for transporting racks 60. Transport-in part 33 receives post-measurement rack 60b from the preceding-stage unit, and transports post-measurement rack 60b in the return direction. Transport-in part 33 is provided with a sensor which detects the presence or absence of post-measurement rack 60b in transport-in part 33. The back side of transport-in part 33 is provided with introduction part 331 for introducing post-measurement rack 60b from transport-in part 33 to setting part 31. When entire post-measurement rack 60b is positioned rearward of setting part 31, introduction part 331 pushes post-measurement rack 60b forward, and sends rack 60b to setting part 31. It is to be noted that transport-in part 33 and transport-out part 32 are not limited to a conveyor belt. Also, introduction part 331 not necessarily pushes post-measurement rack 60b from transport-in part 33 to setting part 31, and may be configured to draw post-measurement rack 60b from transport-in part 33 to setting part 31.

Transport-in part 33 may transfer post-measurement rack 60b received from the preceding-stage unit to the subsequent-stage unit without sending rack 60b to setting part 31.

Racks 60 set in setting part 31 are transferred, along with transfer prevention part 35, forward by transfer unit 34. Rack 60 positioned at the front end is transferred from setting part 31 to transport-out part 32. Transport-out part 32 has a size that allows one rack 60 to be set. Transport-out part 32 transports the received rack 60 in the supply direction, and sends rack 60 to the preceding-stage unit. Transport-out part 32 is provided with a sensor which detects the presence or absence of rack 60 in transport-out part 32.

Transport-out part 32 may receive pre-measurement rack 60a from the subsequent-stage unit, and may transfer rack 60a to the preceding-stage unit.

Pre-measurement rack 60a is set in an area forward of transfer prevention part 35 in setting part 31. As described above, post-measurement rack 60b is transported in by transport-in part 33, and is sent from transport-in part 33 to setting part 31. Since transfer prevention part 35 is on setting part 31, transfer prevention part 35 is invariably positioned forward of post-measurement rack 60b transported in by transport-in part 33. Therefore, post-measurement rack 60b is set in an area rearward of transfer prevention part 35 in setting part 31. Thus, transfer prevention part 35 also serves as a partition section between pre-measurement racks 60a and post-measurement racks 60b.

A user can check how many pre-measurement racks 60a are left by visually recognizing transfer prevention part 35.

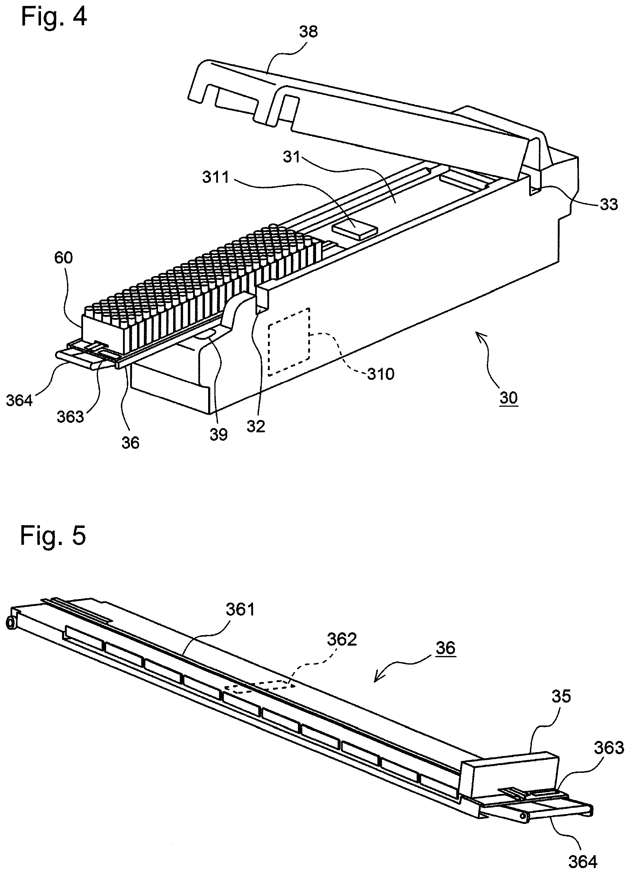

Fig. 4 is referred to. Tray 36 in which multiple racks 60 can be set is detachable to setting part 31. That is, multiple racks 60 can be set in setting part 31 using tray 36. One end of tray 36 is provided with gripper 364. A user grasps gripper 364 and can attach or detach tray 36 to or from rack transport-in/transport-out unit 30, or can carry tray 36. Tray 36 is inserted in setting part 31 from the front side. When tray 36 is mounted in setting part 31, gripper 364 is positioned on the front side. Attachment and detachment of tray 36 to and from setting part 31 is detected by a sensor.

As illustrated in Fig. 5, transfer prevention part 35 is attached to tray 36. Thus, transfer prevention part 35 is attached or detached, with tray 36, to or from rack transport-in/transport-out unit 30.

The upper surface of tray 36 is provided with rail-shaped guidance section 361 extending in a longitudinal direction. Guidance section 361 is engaged with rack 60. Rack 60 is movable on the upper surface of tray 36 in the front-and-back direction while being engaged with guidance section 361. Therefore, guidance section 361 can guide transfer of rack 60 in tray 36, and rack 60 is prevented from coming off tray 36.

Bar code label 362, which is a tray identifier, is affixed to the back surface of tray 36. A bar code (hereinafter referred to as a "tray bar code") obtained by encoding a tray ID that is tray identification information is printed on bar code label 362. The tray ID is tray identification information for identifying tray 36.

Tray ID label 363, on which the tray ID is printed with alphanumeric characters, is affixed to the upper surface of tray 36. A user can easily check the tray ID of tray 36 by reading the tray ID on tray ID label 363.

As illustrated in Fig. 4, rack transport-in/transport-out unit 30 includes bar code reader 311 that is a tray identification information acquirer. As illustrated in Fig. 3, when tray 36 is mounted in rack transport-in/transport-out unit 30, bar code label 362 is positioned at a reading position facing bar code reader 311. When bar code label 362 is at a reading position, bar code reader 311 can read a tray ID from the tray bar code.

As illustrated in Fig. 4, rack transport-in/transport-out unit 30 includes cover 38 that covers setting part 31. By providing cover 38, dirt is prevented from entering into sample container 61, and contact with rack 60 on setting part 31 is prevented.

Rack transport-in/transport-out unit 30 may not be provided with cover 38. In particular, when a rack holding a sample container with a lid is transported, there is no possibility of entering of dirt into the sample container, and thus cover 38 may not be provided.

As illustrated in Fig. 3, rack transport-in/transport-out unit 30 includes operation panel 39 forward of transport-out part 32. Operation panel 39 is provided with multiple operation buttons.

As illustrated in Fig. 4, rack transport-in/transport-out unit 30 internally includes controller 310. Controller 310 controls each component of rack transport-in/transport-out unit 30, and communicates with control unit 50.

Referring to Fig. 1 again, and bar code read unit 70 is described. Bar code read unit 70 includes a bar code reader 71, a setting part 72, a transport-in part 73, a transport-out part 74, and a transporter 75.

Bar code read unit 70 is connected to transport unit 20 and rack transport-in/transport-out unit 30. Transport-in part 73 is connected to transport-out part 32 of rack transport-in/transport-out unit 30. Transport-out part 74 is connected to first transporter 21 of transport unit 20. Transporter 75 is connected to second transporter 22 of transport unit 20, and transport-in part 33 of rack transport-in/transport-out unit 30. Bar code read unit 70 is used for receiving pre-measurement rack 60a from transport-out part 32 of rack transport-in/transport-out unit 30, for reading a bar code of pre-measurement rack 60a, and for sending pre-measurement rack 60a to first transporter 21. Bar code read unit 70 is used for receiving post-measurement rack 60b from second transporter 22 and for sending post-measurement rack 60b to transport-in part 33 of rack transport-in/transport-out unit 30.

Bar code reader 71 is a rack tray identification information acquirer, and can read a rack ID from the rack bar code of rack 60.

Setting part 72 has an elongated rectangular shape in Y direction in a plan view, and is formed flatly to receive racks 60. Setting part 72 is provided on the upper surface of bar code read unit 70. The width of setting part 72 is slightly larger than the length of each rack 60, and multiple racks 60 can be placed alongside in setting part 72 in Y direction. The front end of setting part 72 is provided with bar code reader 71.

Transport-in part 73 is provided forward of setting part 72, and the transport-out part 74 and the transporter 75 are provided rearward of setting part 72. In setting part 72, each rack 60 is transferred backward.

Transport-in part 73 and transport-out part 74 are conveyor belts for transporting rack 60. Transport-in part 73 receives pre-measurement rack 60a from adjacent rack transport-in/transport-out unit 30, and transports pre-measurement rack 60a in the supply direction. Pre-measurement rack 60a on the transport-in part 73 is sent to setting part 72. It is to be noted that the transport-in part 73 and the transport-out part 74 are not limited to a conveyor belt.

Pre-measurement rack 60a, which is set in setting part 72 and for which a rack bar code has been read by bar code reader 71, is transferred backward on setting part 72, and is transferred from setting part 72 to transport-out part 74. Transport-out part 74 has a size that allows one rack 60 to be set. Transport-out part 74 transports the received pre-measurement rack 60a in the supply direction, and sends pre-measurement rack 60a to first transporter 21 of transport unit 20.

Retest standby unit 40 is set on the downstream side of transport unit 20 in the supply direction. Retest standby unit 40 is connected to first transporter 21, and receives each post-measurement rack 60b. Multiple post-measurement racks 60b can be set in retest standby unit 40. Retest standby unit 40 is used for keeping post-measurement rack 60b on standby until a determination result as to necessity of retest is obtained.

Retest standby unit 40 is connected to second transporter 22, and sends post-measurement rack 60b, for which retests of all samples are determined to be unnecessary, to second transporter 22. Post-measurement rack 60b set in retest standby unit 40 includes not only rack 60 for which measurements of all samples are completed but also rack 60 for which measurements of part of samples are incomplete although the samples are aspirated depending on measurement unit 10. Second transporter 22 transports post-measurement rack 60b for which measurements of all samples are completed, and does not transport post-measurement rack 60b for which measurements of part of samples are incomplete. Retest standby unit 40 reserves post-measurement rack 60b which holds a sample for which retest is determined to be necessary, without sending post-measurement rack 60b to second transporter 22.

Sample measurement system 100 does not need to be provided with retest standby unit 40. In this case, instead of retest standby unit 40, a unit can be used, which receives post-measurement rack 60b from first transporter 21, and sends post-measurement rack 60b to second transporter 22.

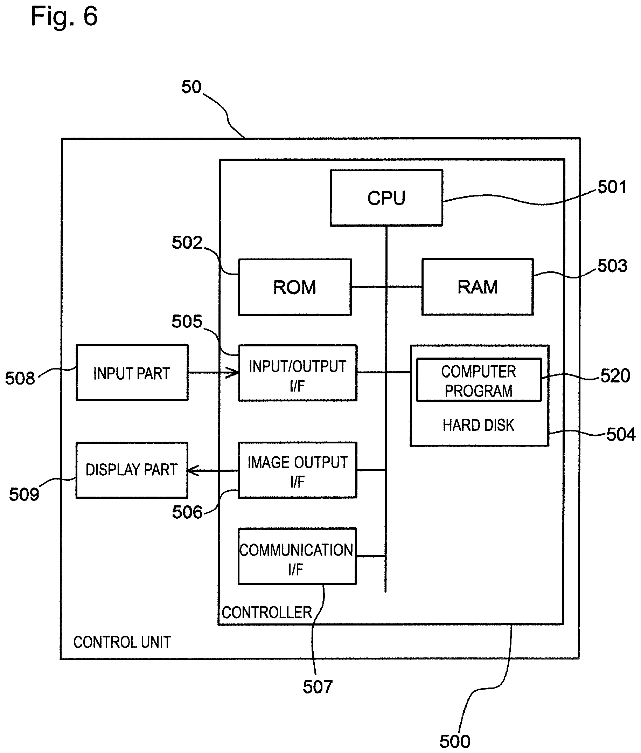

Control unit 50 is formed of a computer. Referred to Fig. 6, the configuration of control unit 50 is described.

Control unit 50 includes controller 500, input part 508, and display part 509. Controller 500 has CPU 501, ROM 502, RAM 503, hard disk 504 that is a storage, Input/output interface 505, image output interface 506, and communication interface 507.

CPU 501 executes a computer program stored in ROM 502 and a computer program loaded to RAM 503. RAM 503 is used for reading a computer program recorded on ROM 502 and hard disk 504. RAM 503 is also utilized as a workspace of CPU 501 when a computer program is executed.

Computer program 520 for determining a transport destination of rack 60 is installed on hard disk 504.

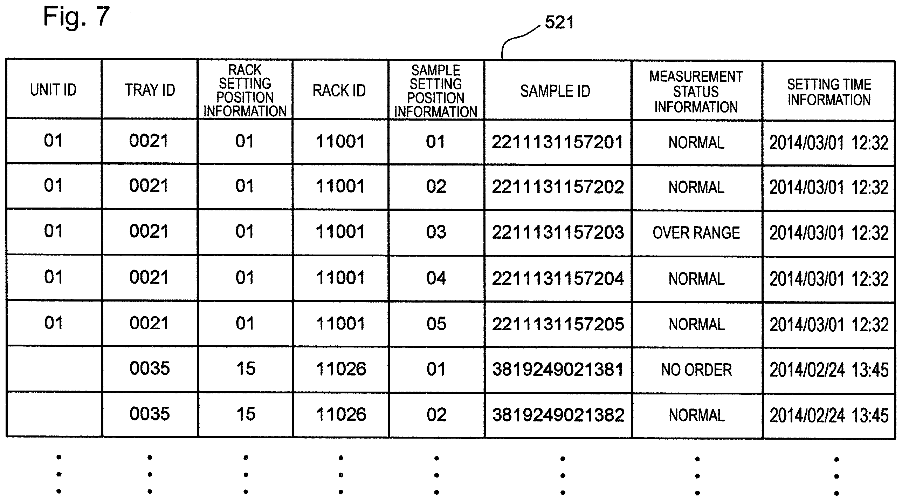

Hard disk 504 includes sample information database 521 for storing information on samples. As illustrated in Fig. 7, as information on a sample, sample information database 521 stores a unit ID, a tray ID, rack setting position information, a rack ID, sample setting position information, a sample ID, measurement status information, and setting time information in association with each other. The unit ID is identification information assigned to each rack transport-in/transport-out unit 30 in Rack transport-in/transport-out device 300. The rack setting position information is setting position information on rack 60 in tray 36, and indicates how many racks are set from the front end the rack 60 inclusive. The sample setting position information is setting position information on sample container 61 in rack 60, and indicates how many sample containers are set from one end, for instance, the left end to sample container 61 inclusive. The sample ID is sample identification information for identifying a sample. The measurement status information is information indicating a measurement status of a sample, and takes one of the following values: "normal" that indicates measurement has been performed normally, "over range" that indicates a measured value is out of an acceptable range, and re-measurement is necessary, "not measured" that indicates measurement has not been performed due to abnormality of the measurement unit, "read error" that indicates measurement by measurement unit 10 has not been performed due to occurrence of read error of a rack bar code, "no order" that indicates no order is present in host computer 80, and "order unreceived" that indicates information process unit 15 has not received an order from host computer 80. The "over range" is assigned to a sample which cannot be automatically re-measured by sample measurement system 100 in the case where the sample has to be diluted for re-measurement or where re-measurement has to be made in another inspection chamber.

As illustrated in Fig. 6, input part 508 is connected to Input/output interface 505. Display part 509 is connected to image output interface 506. Transport unit 20, Rack transport-in/transport-out device 300, and retest standby unit 40 are connected to communication interface 507, and performs data communication with control unit 50.

Communication interface 507 is connected to host computer 80. Orders for sample measurement are registered in host computer 80, and transmits an order according to an inquiry from control unit 50.

### <Operation of Sample Measurement System>

When a sample is measured by sample measurement system 100, as illustrated in Fig. 4, a user first mounts tray 36 to setting part 31 of rack transport-in/transport-out unit 30. When tray 36 is mounted to setting part 31, cover 38 is opened. Multiple pre-measurement racks 60a are placed on tray 36, which is mounted to setting part 31 in a sliding manner from the front side of rack transport-in/transport-out unit 30. When tray 36 is mounted to setting part 31, cover 38 is closed.

When tray 36 is mounted to rack transport-in/transport-out unit 30, information on each pre-measurement sample which is set to tray 36 is not registered in sample information database 521.

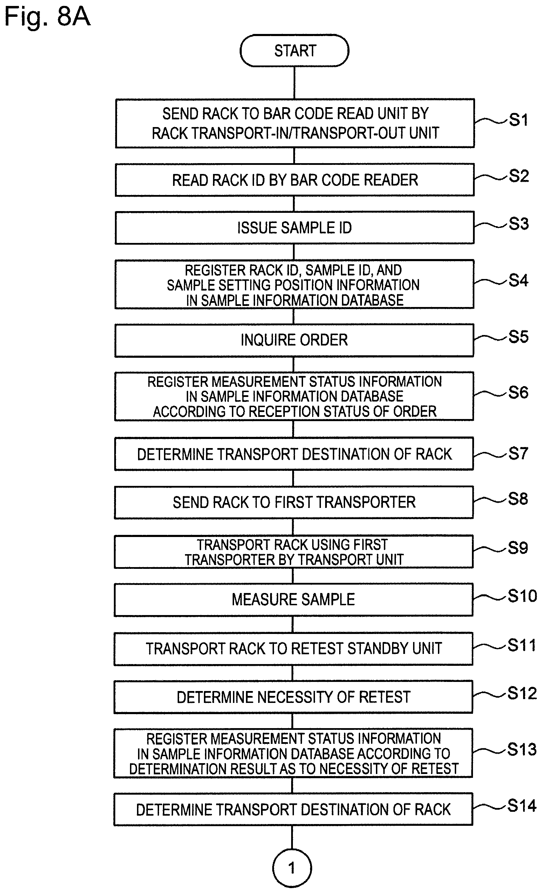

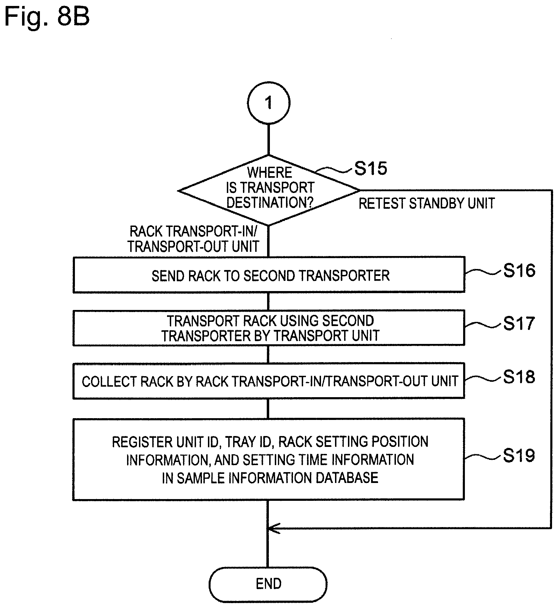

After tray 36 is mounted to setting part 31, bar code reader 311 of rack transport-in/transport-out unit 30 reads the tray ID from the tray bar code of tray 36, and the operation of sample measurement system 100 starts. The operation of sample measurement system 100 is described with reference to Figs. 8A and 8B.

In step S1, rack transport-in/transport-out unit 30 sends pre-measurement rack 60a to bar code read unit 70.

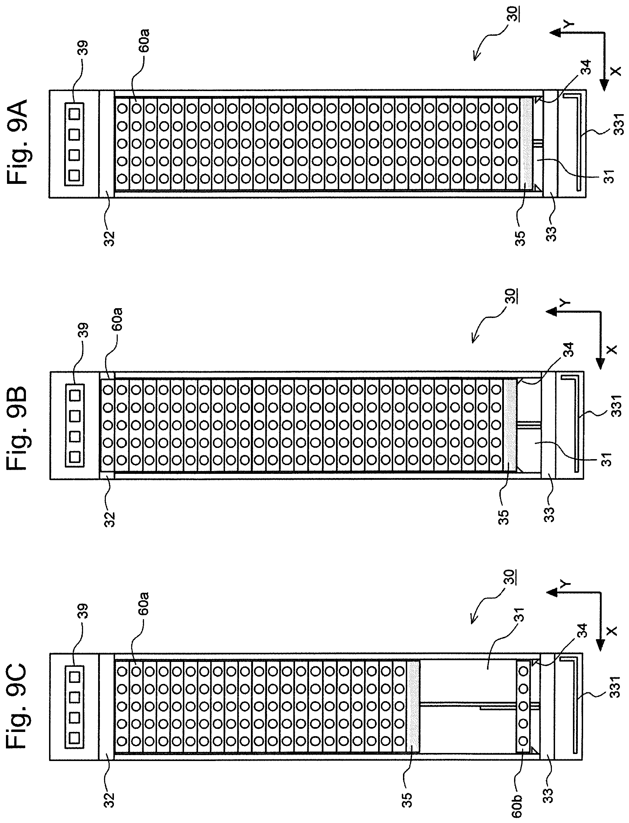

As illustrated in Fig. 9A, in the stage immediately after tray 36 is mounted to setting part 31, transfer prevention part 35 is positioned on the back side of setting part 31, and multiple pre-measurement racks 60a are set in the area on the front side of transfer prevention part 35 in setting part 31.

When pre-measurement rack 60a is sent to the preceding-stage unit, as illustrated in Fig. 9B, transfer unit 34 transfers transfer prevention part 35 forward, thereby transferring all pre-measurement racks 60a on the front side of transfer prevention part 35 forward. At this point, pre-measurement rack 60a on the front most side is transferred to transport-out part 32. Transport-out part 32 transports pre-measurement rack 60a in the supply direction and sends pre-measurement rack 60a to the preceding-stage unit.

Fig. 8A is referred to again. In step S2, bar code reader 71 of bar code read unit 70 reads the rack ID from the rack bar code of pre-measurement rack 60a.

Bar code read unit 70 transmits the rack ID to control unit 50, and control unit 50 which has received the rack ID requests host computer 80 for issuance of a sample ID. Host computer 80 receives the request for issuance of sample ID, and in step S3, issues the sample ID of each sample held in pre-measurement rack 60a. Each sample ID is associated with a setting position in pre-measurement rack 60a. Host computer 80 transmits the sample ID and the sample setting position information, and control unit 50 receives the sample ID and the sample setting position information.

In step S4, control unit 50 registers the received rack ID, sample ID, and sample setting position information in sample information database 521. When an error occurs in reading a rack ID, instead of the rack ID, bar code read unit 70 transmits information indicating "read error" to control unit 50. When receiving the information indicating "read error", in step S4, control unit 50 registers measurement status information of "read error" in sample information database 521.

A configuration may be adopted in which a bar code label, on which the bar code of a sample ID is printed, is affixed to each sample container 61, and bar code read unit 70 reads a sample ID. In this case, bar code read unit 70 determines a setting position in rack 60 of each sample. Rack ID, sample ID, and sample setting position information are transmitted to control unit 50, and control unit 50 registers the received rack ID, sample ID, and sample setting position information in sample information database 521.

In step S5, control unit 50 inquires an order to host computer 80 using a rack ID and a sample ID as keys. Host computer 80 retrieves an order matching the received rack ID and sample ID, and transmits the order to control unit 50. In step S6, control unit 50 registers measurement status information in sample information database 521 according to a reception status of the order. In the processing in step S6, when notification indicating that no order is present is received from host computer 80, control unit 50 registers the measurement status information indicating "no order" in sample information database 521, whereas when no response is received for a certain period of time from host computer 80, control unit 50 registers the measurement status information indicating "order unreceived" in sample information database 521.

In step S7, control unit 50 determines a transport destination of pre-measurement rack 60a based on the order. The order includes information on measurement items, and control unit 50 determines a transport destination to be measurement unit 10 that can measure a measurement item requested in the order. In this process, control unit 50 avoids transport of pre-measurement rack 60a to a specific measurement unit 10 in a concentrated manner.

When a transport destination is determined, in step S8, bar code read unit 70 sends pre-measurement rack 60a to first transporter 21 of transport unit 20. In step S9, transport unit 20 transports pre-measurement rack 60a in the supply direction by first transporter 21. Measurement path 23 corresponding to measurement unit 10 at a transport destination draws pre-measurement rack 60a, and pre-measurement rack 60a is transported to measurement unit 10.

When pre-measurement rack 60a arrives at measurement unit 10 at a transport destination, in step S10, measurement unit 10 aspirates a sample from sample container 61 held in pre-measurement rack 60a, and measures the sample. When multiple samples are held in pre-measurement rack 60a, measurement unit 10 measures all the samples.

In step S11, transport unit 20 transfers post-measurement rack 60b, from which all the samples are aspirated and measured, to first transporter 21 by measurement path 23, and transports post-measurement rack 60b to retest standby unit 40 by first transporter 21. Retest standby unit 40 holds post-measurement rack 60b until a determination result as to necessity of retest is obtained.

In step S12, host computer 80 or measurement unit 10 determines necessity of retest, and transmits a determination result as to necessity of retest to control unit 50. In step S13, control unit 50 registers measurement status information in sample information database 521 according to the determination result as to necessity of retest. When retest is unnecessary or retest is necessary for a measurement item which can be automatically re-measured by sample measurement system 100, control unit 50 registers the measurement status information indicating "normal" in sample information database 521. When retest is necessary for a measurement item which cannot be automatically re-measured by sample measurement system 100, control unit 50 registers the measurement status information indicating "over range" in sample information database 521.

In step S14, control unit 50 determines a transport destination of post-measurement rack 60b according to the determination result as to necessity of retest. The transport destination of post-measurement rack 60b holding only samples for which retests are determined to be unnecessary is rack transport-in/transport-out unit 30. Control unit 50 determines that the transport destination of post-measurement rack 60b holding only samples for which retests are determined to be unnecessary is rack transport-in/transport-out unit 30 which has space in setting part 31. The transport destination of post-measurement rack 60b holding a sample for which retest is determined to be necessary is retest standby unit 40, and post-measurement rack 60b is reserved in retest standby unit 40.

The decision rule for a transport destination is not limited to the rule described above. Each of multiple rack transport-in/transport-out units 30 is set to specifically for reserving post-measurement rack 60b holding samples having the measurement status information indicating "normal", specifically for reserving post-measurement rack 60b holding samples having the measurement status information indicating "over range", or specifically for reserving post-measurement rack 60b holding samples having the measurement status information indicating "read error", and a rack transport-in/transport-out unit which is to be a transport destination may be determined so that post-measurement racks 60b are distributed according to measurement status information. Consequently, post-measurement racks 60b holding samples having specific measurement status information are collectively set to specific tray 36, and thus a user can easily retrieve post-measurement rack 60b holding a sample having specific measurement status information.

Fig. 8B is referred to. When the transport destination of post-measurement rack 60b is retest standby unit 40, in step S15, the flow proceeds to "retest standby unit", and a transport operation for post-measurement rack 60b is completed.

When the transport destination of post-measurement rack 60b is rack transport-in/transport-out unit 30, in step S15, the flow proceeds to "rack transport-in/transport-out unit", and in step S16, retest standby unit 40 sends post-measurement rack 60b to second transporter 22 of transport unit 20. In step S17, transport unit 20 transports post-measurement rack 60b to rack transport-in/transport-out unit 30 at the transport destination by second transporter 22.

Post-measurement rack 60b is sent from second transporter 22 to transporter 75 of bar code read unit 70, and is sent to transport-in part 33 of adjacent rack transport-in/transport-out unit 30 by transporter 75. When post-measurement rack 60b arrives at transport-in part 33 of target rack transport-in/transport-out unit 30, introduction part 331 sends post-measurement rack 60b to setting part 31, and in step S18, rack transport-in/transport-out unit 30 collects post-measurement rack 60b.

When receiving post-measurement rack 60b, rack transport-in/transport-out unit 30 transmits, to control unit 50, its own unit ID, a tray ID which is read when tray 36 is mounted, the rack ID of each post-measurement rack 60b set in tray 36, the rack setting position information of each post-measurement rack 60b, and setting time information indicating which date and time the rack is set. Rack setting position information indicates the position in which post-measurement rack 60b is set at that point. When the setting position of post-measurement rack 60b is changed because pre-measurement rack 60a is transported out, rack setting position information indicates the setting position after the change.

In step S19, control unit 50 receives a unit ID, a tray ID, rack setting position information, and setting time information, and registers those information in sample information database 521. The transport operation for post-measurement rack 60b is now completed.

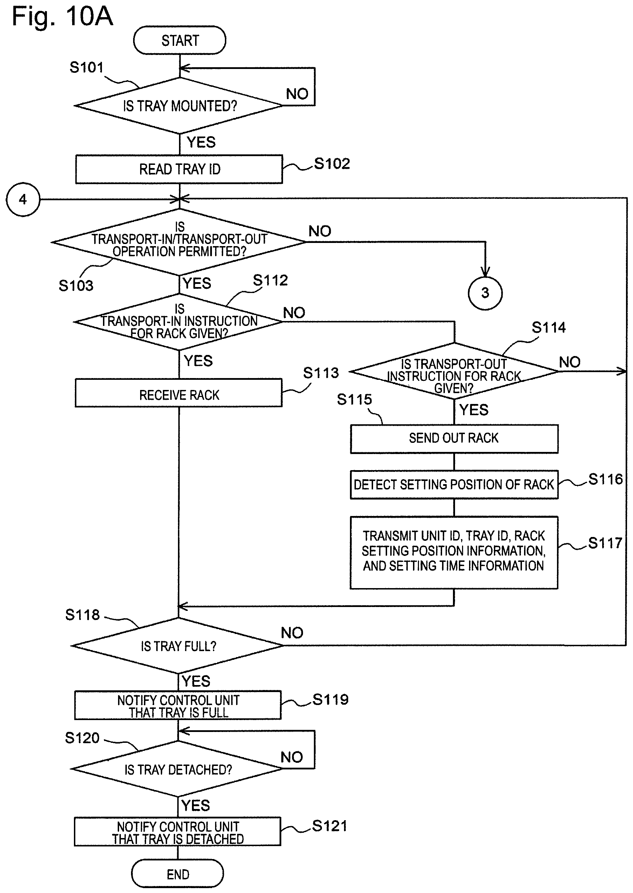

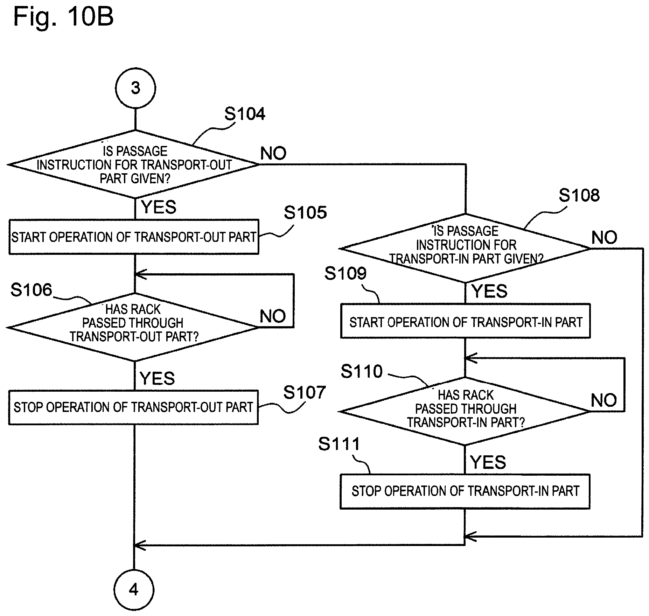

The detailed operation of rack transport-in/transport-out unit 30 is described with reference to Fig. 10A and Fig. 10B. In step S101, controller 310 of rack transport-in/transport-out unit 30 determines whether or not tray 36 is mounted to setting part 31. When tray 36 is not mounted, controller 310 causes the flow to proceed to NO in step S101 and repeats the processing in step S101. When tray 36 is mounted, in step S101, controller 310 causes the flow to proceed to YES, and executes step S102.

In step S102, bar code reader 311 reads a tray ID from the tray bar code. Controller 310 stores the read tray ID.

When permitting rack transport-in/transport-out unit 30 to perform a transport-in/transport-out operation, control unit 50 transmits a permit signal for the transport-in/transport-out operation to rack transport-in/transport-out unit 30 to be permitted. In step S103, controller 310 determines whether or not the transport-in/transport-out operation is permitted. When a transport-in/transport-out operation is not permitted, the flow proceeds to NO in step S103 and controller 310 executes step S104. When a transport-in/transport-out operation is permitted, in step S103, controller 310 causes the flow to proceed to YES, and executes step S112.

When pre-measurement rack 60a is transported from one rack transport-in/transport-out unit 30 to bar code read unit 70, passing through adjacent preceding rack transport-in/transport-out unit 30, pre-measurement rack 60a needs to be passed through transport-out part 32 of preceding-stage rack transport-in/transport-out unit 30. In this case, control unit 50 transmits an instruction signal for instructing passage of transport-out part 32 to rack transport-in/transport-out unit 30 through which pre-measurement rack 60a is passed.

In step S104, controller 310 determines whether or not a passage instruction to pass transport-out part 32 is given. When a passage instruction is given, in step S104, controller 310 causes the flow to proceed to YES, and executes step S105. In step S105, controller 310 operates transport-out part 32. Consequently, pre-measurement rack 60a transported from the subsequent-stage unit is moved to transport-out part 32, and is transferred to the preceding-stage unit.

In step S106, controller 310 determines, on the basis of an output signal of a sensor, whether or not pre-measurement rack 60a has passed through transport-out part 32. When pre-measurement rack 60a has not passed through transport-out part 32, in step S106, controller 310 causes the flow to proceed to NO, and repeats the processing in step S106. When pre-measurement rack 60a has passed through transport-out part 32, in step S106, controller 310 causes the flow to proceed to YES, and stops transport-out part 32 in step S107. After the processing in step S107 is completed, controller 310 returns the processing to step S103.

In step S104, when a passage instruction to pass transport-out part 32 is not given, in step S104, controller 310 causes the flow to proceed to NO, and executes step S108.

When post-measurement rack 60b is transported from bar code read unit 70 to subsequent-stage rack transport-in/transport-out unit 30 passing through preceding-stage rack transport-in/transport-out unit 30, post-measurement rack 60b needs to be passed through transport-in part 33 of preceding-stage rack transport-in/transport-out unit 30. In this case, control unit 50 transmits an instruction signal for instructing passage of transport-in part 33 to rack transport-in/transport-out unit 30 through which post-measurement rack 60b is passed.

In step S108, controller 310 determines whether or not a passage instruction to pass transport-in part 33 is given. When a passage instruction is given, in step S108, controller 310 causes the flow to proceed to YES, and executes step S109. In step S109, controller 310 operates transport-in part 33. Consequently, post-measurement rack 60b transported from the preceding-stage unit is moved to transport-in part 33, and is transferred to the subsequent-stage unit.

In step S110, controller 310 determines, on the basis of an output signal of a sensor, whether or not post-measurement rack 60b has passed through transport-in part 33. When post-measurement rack 60b has not passed through transport-in part 33, in step S110, controller 310 causes the flow to proceed to NO, and repeats the processing in step S110. When post-measurement rack 60b has passed through transport-in part 33, in step S110, controller 310 causes the flow to proceed to YES, and stops transport-in part 33 in step S111. After the processing in step S111 is completed, controller 310 returns the processing to step S103.

In step S108, when a passage instruction for passing transport-in part 33 is not given, in step S108, controller 310 causes the flow to proceed to NO, and returns the processing to step S103.

When post-measurement rack 60b is collected by one rack transport-in/transport-out unit 30, control unit 50 transmits an instruction signal for instructing transport-in of post-measurement rack 60b to relevant rack transport-in/transport-out unit 30. The instruction signal includes the rack ID of post-measurement rack 60b to be transported in.

Fig. 10A is referred to. In step S112, controller 310 determines whether or not a transport-in instruction for post-measurement rack 60b is given. When a transport-in instruction for post-measurement rack 60b is given, in step S112, controller 310 causes the flow to proceed to YES, and executes step S113.

In step S113, controller 310 performs a transport operation on post-measurement rack 60b. In the processing in step S113, transport-in part 33 operates, thus post-measurement rack 60b is transferred from the preceding-stage unit to transport-in part 33. Subsequently, introduction part 331 moves forward, and pushes post-measurement rack 60b forward to setting part 31. As illustrated in Fig. 9C, post-measurement rack 60b is transferred to an area on the back side of transfer prevention part 35 in setting part 31. The subsequent post-measurement racks 60b are sequentially transferred to an area on the back side of transfer prevention part 35 in a similar manner.

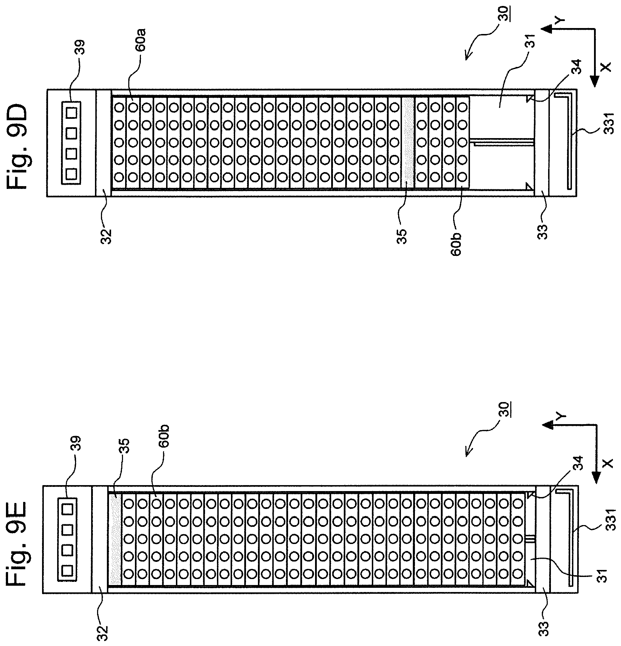

As illustrated in Fig. 9D, multiple post-measurement racks 60b are set alongside in an area on the back side of transfer prevention part 35.

Fig. 10A is referred to again. After the processing in step S113 is completed, controller 310 executes step S118.

In step S112, when a transport-in instruction for post-measurement racks 60b is not given, in step S112, controller 310 causes the flow to proceed to NO, and executes step S114.

When pre-measurement rack 60a is transported from one rack transport-in/transport-out unit 30, control unit 50 transmits an instruction signal for instructing transport-out of post-measurement rack 60b to relevant rack transport-in/transport-out unit 30.

In step S114, controller 310 determines whether or not a transport-out instruction for pre-measurement rack 60a is given. When a transport-out instruction for pre-measurement rack 60a is not given, in step S114, controller 310 causes the flow to proceed to NO, and returns the processing to step S103. When a transport-out instruction for pre-measurement rack 60a is given, in step S114, controller 310 causes the flow to proceed to YES, and executes step S115.

In step S115, controller 310 performs a transport-out operation for pre-measurement rack 60a. In the processing in step S115, transfer unit 34 moves forward, thereby transferring pre-measurement rack 60a set in setting part 31 to transport-out part 32.

As illustrated in Fig. 9D, post-measurement rack 60b is set in an area on the back side of transfer prevention part 35, transfer unit 34 transfers post-measurement rack 60b on the back most side forward. As illustrated in Fig. 9B, post-measurement rack 60b is not set in an area on the back side of transfer prevention part 35, transfer unit 34 transfers transfer prevention part 35 forward. Consequently, all pre-measurement racks 60a, post-measurement racks 60b and transfer prevention part 35 set in setting part 31 are transferred forward, and pre-measurement rack 60a on the front most side is transferred to transport-out part 32.

After each pre-measurement rack 60a is transferred to transport-out part 32, transfer unit 34 moves to a standby position at the back end of setting part 31. Subsequently, transport-out part 32 operates, and sends pre-measurement rack 60a on transport-out part 32 in the supply direction. Consequently, pre-measurement rack 60a is transferred to the preceding-stage unit, and is transported to measurement unit 10.

When all pre-measurement racks 60a are transported from setting part 31, as illustrated in Fig. 9E, transfer prevention part 35 is positioned on the front side of all post-measurement racks 60b. At this point, even when transfer unit 34 attempts to transfer prevention part 35 forward, transfer prevention part 35 is stopped by a stop member provided at the front end of tray 36, and thus transfer prevention part 35 is not transferred to transport-out part 32.

Fig. 10A is referred to again. In step S116, controller 310 detects a rack setting position of each transported-in post-measurement rack 60b by an amount of movement of transfer unit 34. In step S117, controller 310 transmits to control unit 50, its own unit ID, a tray ID which is read when tray 36 is mounted, the rack ID of each post-measurement rack 60b sets in tray 36, the rack setting position information of each post-measurement rack 60b, and setting time information indicating which date and time the rack is set. After the processing in step S117 is completed, controller 310 executes step S118.

In step S118, controller 310 determines whether or not the number of post-measurement racks 60b in setting part 31 has reached a predetermined upper limit. When the number of post-measurement racks 60b in setting part 31 has not reached a predetermined upper limit, in step S118, controller 310 causes the flow to proceed to NO, and returns the processing to step S103. When the number of post-measurement racks 60b in setting part 31 has reached a predetermined upper limit, in step S118, controller 310 causes the flow to proceed to YES, and executes step S119.

In step S119, controller 310 transmits, to control unit 50, a notification signal indicating that tray 36 is full. Upon receiving a notification signal, control unit 50 displays a notification screen on display part 509 for notifying a user that tray 36 of rack transport-in/transport-out unit 30 is full. Thus, a user can tell a replace time for tray 36 has arrived, and can replace tray 36 efficiently.

A user removes full tray 36 from rack transport-in/transport-out unit 30, and stores tray 36 in a storage chamber or the like.

In step S120, controller 310 determines whether or not tray 36 is detached from setting part 31. When tray 36 is not detached, in step S120, controller 310 causes the flow to proceed to NO, and repeats the processing in step S120. When tray 36 is detached, in step S120, controller 310 causes the flow to proceed to YES, and in step S121, transmits a notification signal indicating detachment of a tray to control unit 50, and completes the processing. The notification signal includes the tray ID of the detached tray 36. Upon receiving a notification signal, control unit 50 deletes a unit ID corresponding to the received tray ID in sample information database 521.

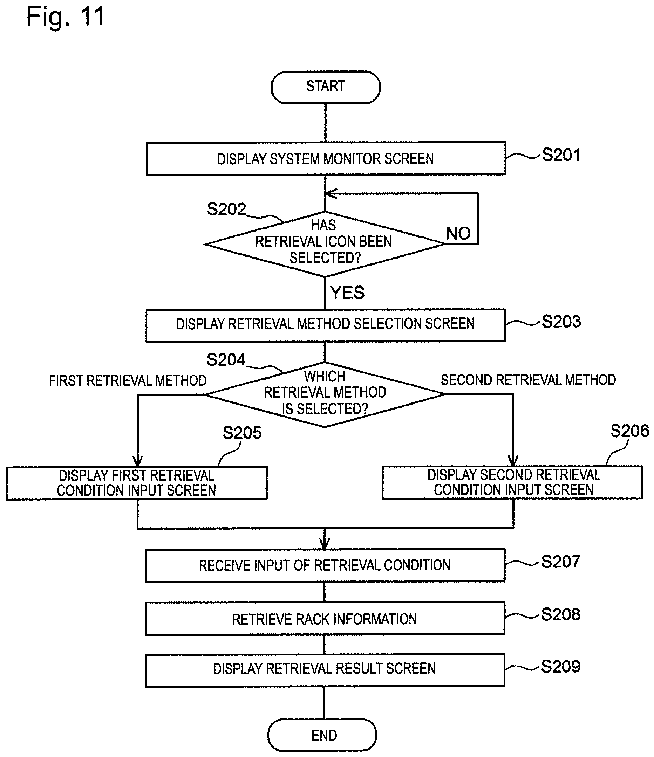

Retrieval of rack information is described with reference to Fig. 11. A user uses control unit 50 for retrieval of rack information.

In step S201, CPU 501 displays a system monitor screen on display part 509.

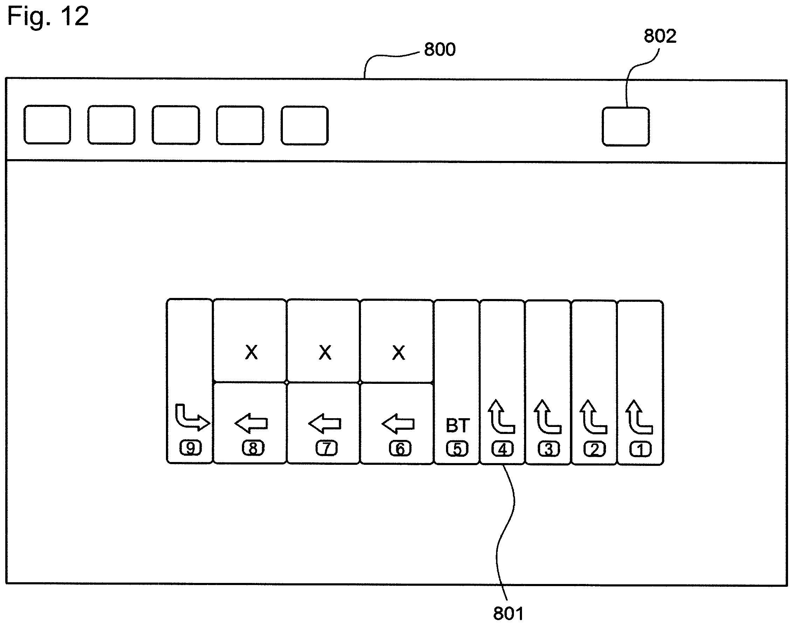

The system monitor screen is described with reference to Fig. 12. System monitor screen 800 includes configuration diagram 801 of sample measurement system 100, and retrieval icon 802. When starting retrieval of rack information, a user selects retrieval icon 802 via input part 508.

Fig. 11 is referred to again. In step S202, CPU 501 determines whether or not selection of retrieval icon 802 has been received. When selection of retrieval icon 802 has not been received, in step S202, CPU 501 causes the flow to proceed to NO, and executes step S202 again.

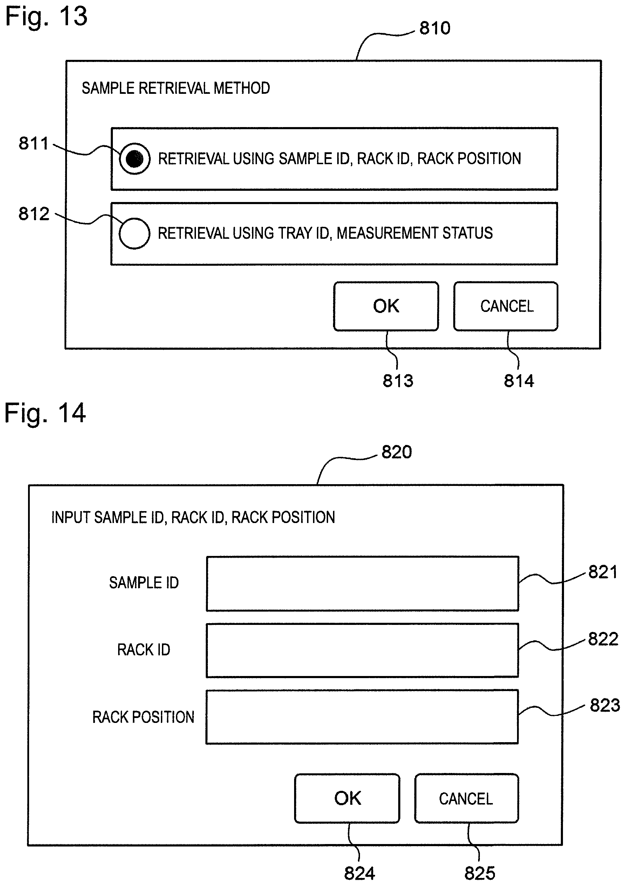

When selection of retrieval icon 802 has been received, in step S202, CPU 501 causes the flow to proceed to YES, and executes step S203. In step S203, CPU 501 displays a retrieval method selection screen on display part 509. The retrieval method selection screen is described with reference to Fig. 13. Retrieval method selection screen 810 includes first selection section 811, second selection section 812, OK button 813, and cancel button 814. First selection section 811 is a radio button for selecting a retrieval method (hereinafter referred to as "first retrieval method") using a sample ID, a rack ID, or rack setting position information. Second selection section 812 is a radio button for selecting a retrieval method (hereinafter referred to as "second retrieval method") using a tray ID or measurement status information. A user can select either one of first selection section 811 and second selection section 812. It is to be noted that both first selection section 811 and second selection section 812 may be selectable.

When starting retrieval, a user selects OK button 813 via input part 508 with one of first selection section 811 and second selection section 812 selected. This allows input of a retrieval condition. When retrieval is not necessary to be performed, a user selects cancel button 814 via input part 508.

Fig. 11 is referred to again. In step S204, CPU 501 determines which retrieval method is selected. When the first retrieval method is selected, in step S204, CPU 501 causes the flow to proceed to "first retrieval method", and executes step S205. In step S205, CPU 501 displays a first retrieval condition input screen on display part 509. The first retrieval condition input screen is described with reference to Fig. 14. First retrieval condition input screen 820 includes first input part 821, second input part 822, third input part 823, OK button 824, and cancel button 825. First input part 821 is an input box for inputting a sample ID, second input part 822 is an input box for inputting a rack ID, and third input part 823 is an input box for inputting rack setting position information.

For retrieval using a sample ID, a user inputs the sample ID to first input part 821 as a retrieval condition, and selects OK button 824. The sample ID which can be inputted as a retrieval condition includes a patient ID for identifying a patient and a sample container ID for identifying a sample container. For retrieval using a rack ID, a user inputs the rack ID to second input part 822 as a retrieval condition, and selects OK button 824. For retrieval using rack setting position information, a user inputs the rack setting position information to third input part 823 as a retrieval condition, and selects OK button 824. When retrieval is not necessary to be performed, a user selects cancel button 825 via input part 508.

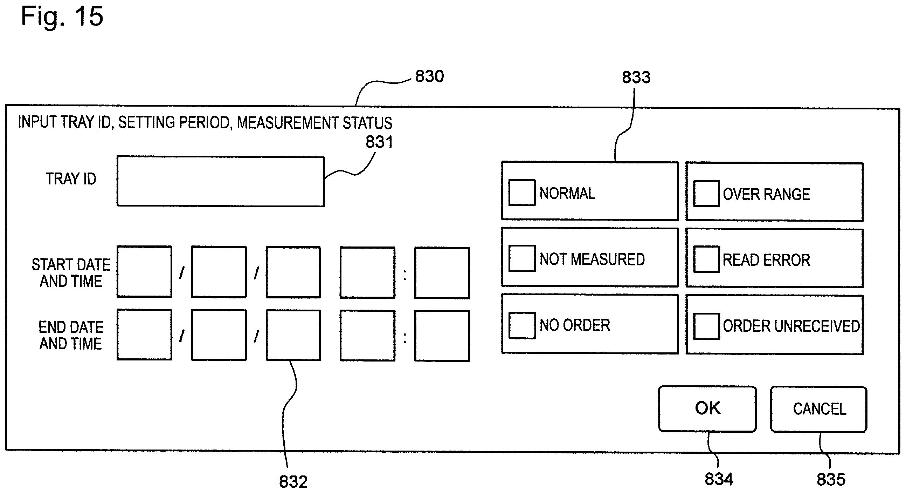

Fig. 11 is referred to again. When the second retrieval method is selected in step S204, in step S204, CPU 501 causes the flow to proceed to "second retrieval method", and executes step S206. In step S206, CPU 501 displays a second retrieval condition input screen on display part 509. The second retrieval condition input screen is described with reference to Fig. 15. Second retrieval condition input screen 830 includes first input part 831, second input part 832, selection section 833, OK button 834, and cancel button 835. First input part 831 is an input box for inputting a tray ID. Second input part 832 includes multiple input boxes for inputting start date and time and end date and time of setting period. Selection unit 833 includes multiple check boxes for selecting "normal", "over range", "not measured", "read error", "no order", or "order unreceived" as measurement status information. Multiple boxes may be selected from selection section 833 at the same time.

For retrieval using a tray ID, a user inputs the tray ID to first input part 831, and selects OK button 834. For retrieval using setting time information, a user inputs start date and time and end date and time of setting period to second input part 832 as a retrieval condition, and selects OK button 834. For retrieval using measurement status information, a user inputs at least one check box in the selection section 833, and selects OK button 834. When retrieval is not necessary to be performed, a user selects cancel button 825 via input part 508.

Fig. 11 is referred to again. In step S207, CPU 501 receives input of a retrieval condition. In step S208, CPU 501 retrieves rack information which is a record of sample information database 521, the record meeting the inputted retrieval condition. In step S209, CPU 501 displays a retrieval result screen including rack information as a retrieval result on display part 509, and completes the processing.

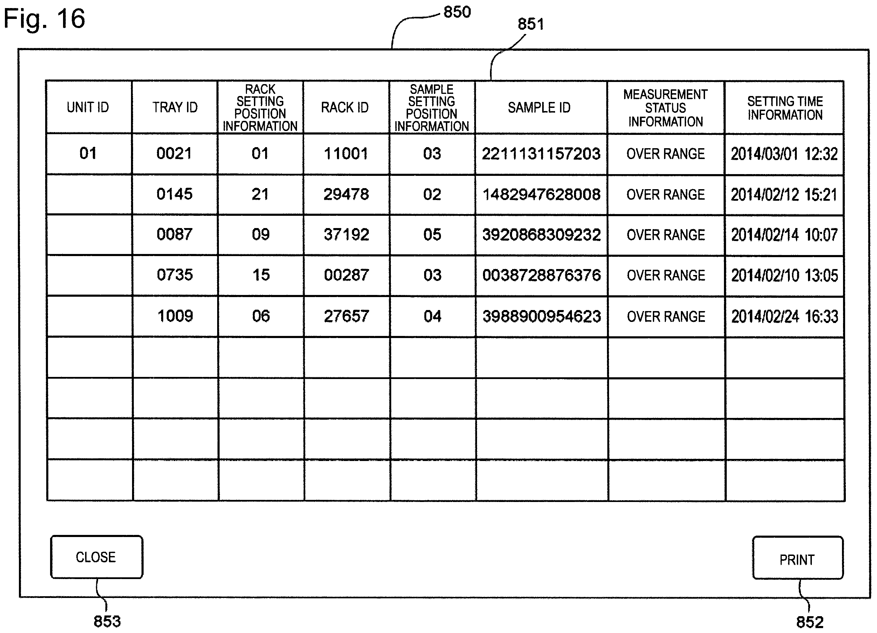

The retrieval result screen is described with reference to Fig. 16. Retrieval result screen 850 includes retrieval result display area 851 for displaying rack information as retrieval results in a list format, closing button 852 for closing the screen, and print button 853 for printing the retrieval results. In retrieval result display area 851, the display part 509 displays the items of unit ID, tray ID, rack setting position information, rack ID, sample setting position information, sample ID, measurement status information, and setting time information in a row for each sample.

Since the retrieval results include the tray ID, a user can easily identify tray 36 in which target post-measurement rack 60b is set. Even when the target post-measurement rack 60b is set in tray 36 which has been detached from the system, tray 36 can be identified by the tray ID, and thus a user can easily retrieve the target post-measurement rack 60b. Since tray ID label 363, on which the tray ID is printed with alphanumeric characters, is affixed to each tray 36, a user can easily identify the target tray 36 by comparing the tray ID as a retrieval result with the tray ID of tray ID label 363.

When the target post-measurement rack 60b is set in tray 36 before being detached from the system, it is difficult to tell which rack transport-in/transport-out unit 30 has collected the target post-measurement rack 60b because multiple rack transport-in/transport-out units 30 are provided in sample measurement system 100. However, since the retrieval results include the tray ID, it is easy to identify tray 36, that is, rack transport-in/transport-out unit 30, in which target post-measurement rack 60b is set. In addition, since the retrieval results also include the unit ID, when tray 36 is not detached from the system, it is easy to identify rack transport-in/transport-out unit 30, in which target post-measurement rack 60b is set.

The tray identification information for identifying tray 36 is not limited to the tray ID. For instance, as the tray identification information, position information indicating the position in which tray 36 is stored in a storage chamber may be stored in sample information database 521. Thus, the retrieval results include position information, and a user can identify target tray 36 in a storage chamber. Each tray 36 may be colored in one of red, blue, yellow, etc., and color information indicating the color of tray 36 may be stored as tray identification information in sample information database 521. Thus, the retrieval results include color information on tray 36, and a user can identify target tray 36 by searching for tray 36 with the relevant color.

Since the retrieval results include, in addition to the tray ID, rack setting position information, a user can easily identify the position in tray 36, in which target post-measurement rack 60b is set. Consequently, a user can retrieve target post-measurement rack 60b more easily.

When the rack ID of target post-measurement rack 60b is known and a user inputs the rack ID as a retrieval condition, the tray ID of tray 36 in which post-measurement rack 60b is set is displayed as a retrieval result. Consequently, a user can easily retrieve tray 36 in which target post-measurement rack 60b is set.

When the sample ID of a target sample is known and a user inputs the sample ID as a retrieval condition, the tray ID of tray 36 in which post-measurement rack 60b holding the target sample is set is displayed as a retrieval result. Consequently, a user can easily retrieve tray 36 in which post-measurement rack 60b holding the target sample is set.

Since measurement status information can be specified as a retrieval condition, it is possible to easily retrieve tray 36 in which post-measurement rack 60b with a specific measurement status is set. Thus, it is possible to collectively retrieve post-measurement racks 60b with a specific measurement status from each tray 36 and to provide necessary treatment.

For instance, retrieval of rack information with measurement status information of "over range" allows a user to easily identify tray 36 that includes post-measurement rack 60b holding a sample which cannot be automatically re-measured by sample measurement system 100. Therefore, it is possible for a user to collect post-measurement racks 60b holding a sample with measurement status information of "over range" from each tray 36, and to provide a preparation for re-measurement, such as diluting the sample and transferring the sample to another inspection chamber.

For instance, retrieval of rack information with measurement status information of "read error" allows a user to easily identify tray 36 that includes post-measurement rack 60b in which an error in reading a rack ID has occurred. Therefore, it is possible for a user to collectively take, from trays 36, post-measurement racks 60b in which an error in reading a rack ID has occurred, and to provide necessary treatment such as re-affixing a bar code label, and individually inputting a rack ID or a sample ID to control unit 50.

For instance, retrieval of rack information with measurement status information of "no order" or "order unreceived" allows a user to easily identify tray 36 that includes post-measurement rack 60b holding a sample for which no order is placed or a sample for which acquisition of an order has failed. Therefore, it is possible for a user to collectively retrieve from trays 36 post-measurement racks 60b holding a sample for which an order is not normally acquired, and to provide necessary treatment such as transferring to other measurement.

Since a setting period can be specified as a retrieval condition, a user can easily identify tray 36 that includes post-measurement rack 60b which is set in tray 36 in the specified setting period.

It is sufficient that the information stored in sample information database 521 include at least tray ID, sample ID, and rack ID. Sample information database 521 may store information other than the tray ID, sample ID, and rack ID, and may store information other than the above-mentioned information, such as a measurement result.

For printing a retrieval result, a user selects print button 853. A retrieval result is printed when control unit 50 is connected to a printer. For closing the retrieval result screen, a user selects closing button 852.

Instead of rack transport-in/transport-out unit 30, a transport-out unit to transport racks out and a transport-in unit to transport racks in may be separately provided. In this case, each tray is detachably attached to the transport-in unit, and information on the racks set in the tray in transport-in unit is registered in sample information database 521.

### REFERENCE SIGNS LIST

- 100: Sample measurement system
- 10: Measurement unit
- 20: transport unit
- 21: first transporter
- 22: second transporter
- 30: rack transport-in/transport-out unit
- 31: setting part
- 32: transport-out part
- 33: transport-in part
- 331: introduction part
- 34: transfer unit
- 35: transfer prevention part
- 361: Guidance section
- 362: bar code label
- 363: tray ID label
- 37: stop member
- 38: cover
- 310: Controller
- 50: control unit
- 509: display part
- 60: rack
- 61: sample container
- 70: bar code read unit

## Claims

1. A sample measurement system comprising:
a measurement unit that measures a sample stored in a sample container;
a transport unit that transports a rack that can hold a plurality of sample containers, via the measurement unit;
a collection unit that is detachably provided with a tray in which a plurality of racks can be set, and that collects the rack transported from the measurement unit by the transport unit and sets the rack in the tray;
a storage that stores sample identification information of the sample, rack identification information of the rack, and tray identification information of the tray in association with each other;
an input part;
a display part; and
a controller that, in a condition in which the input part receives input of the sample identification information or the rack identification information, causes the display part to display the tray identification information stored in association with the inputted sample identification information or the inputted rack identification information.

2. The sample measurement system according to claim 1, wherein
the storage stores setting position information on the rack in the tray in association with the sample identification information of the sample stored in the sample container held in the rack and the rack identification information of the rack, and
in a condition in which the input part receives the input of the sample identification information or the rack identification information, the controller causes the display part to display the tray identification information and the setting position information stored in the storage in association with the sample identification information or the rack identification information.

3. The sample measurement system according to claim 1 or claim 2, wherein
the storage stores measurement status information on a status of measurement of the sample in association with the sample identification information of the sample and the rack identification information of the rack which holds the sample container in which the sample is stored, and
in a condition in which the input part receives input of the measurement status information, the controller causes the display part to display the sample identification information, the rack identification information, and the tray identification information stored in the storage in association with the measurement status information

4. The sample measurement system according to claim 3, wherein
the measurement status information indicates whether re-measurement of the sample is necessary.

5. The sample measurement system according to claim 3 or 4, wherein
the measurement status information indicates whether the sample has been measured by the measurement unit.

6. The sample measurement system according to any one of claims 3 to 5, further comprising
a sample identification information acquirer that acquires the sample identification information from a sample identifier, wherein the sample identifier is provided on the sample container and records the sample identification information, wherein
the measurement status information indicates whether an error has occurred when the sample identification information acquirer acquires the sample identification information.

7. The sample measurement system according to any one of claims 3 to 6, wherein
the measurement unit that measures the sample based on an order assigned to the sample, and
the measurement status information indicates whether the order has been assigned to the sample.

8. The sample measurement system according to any one of claims 3 to 7, wherein
the collection unit selectively collects the rack transported by the transport unit according to the measurement status information associated with the rack identification information of the rack.

9. The sample measurement system according to any one of claims 1 to 8, wherein
in a condition in which the input part receives input of the setting position information, the controller causes the display part to display the sample identification information, the rack identification information, and the tray identification information stored in the storage in association with the setting position information.

10. The sample measurement system according to any one of claims 1 to 9, wherein
in a condition in which the input part receives input of the tray identification information, the controller causes the display part to display the sample identification information and the rack identification information stored in the storage in association with the tray identification information.

11. The sample measurement system according to any one of claims 1 to 5, further comprising
a rack identification information acquirer that acquires the rack identification information from a rack identifier, wherein the rack identifier is provided on the rack and records the rack identification information.

12. The sample measurement system according to any one of claims 2 to 11, wherein
the storage stores setting time information indicating a setting time of the rack in the tray in association with the sample identification information of the sample stored in the sample container held in the rack and the rack identification information of the rack, and
in a condition in which the input part receives input of the setting time information, the controller causes the display part to display the sample identification information, the rack identification information, and the tray identification information associated with the setting time information.

13. The sample measurement system according to any one of claims 1 to 12, wherein
the collection unit transport another rack set in the tray, and collects the rack transported by the transport unit.

14. The sample measurement system according to any one of claims 1 to 13, comprising
the measurement unit comprises a plurality of measurement units, wherein
the transport unit selectively transports the rack to a measurement unit of the plurality of measurement units.

15. The sample measurement system according to any one of claims 1 to 14, wherein
the tray is distinguishable by the tray identification information.

16. A method of retrieving tray identification information of a tray which is detachably set in a collection unit and in which a rack is set, the rack being transported to the collection unit via a measurement unit for measuring a sample stored in a sample container held in the rack, the method comprising:
receiving input of sample identification information of the sample or rack identification information of the rack as a retrieval condition;
retrieving tray identification information associated with the received sample identification information or the received rack identification information; and
displaying the retrieved tray identification information.

## Amended claims

### Amended claims under Art. 19.1 PCT

**1.** (Amended) A sample measurement system comprising:
a measurement unit that measures a sample stored in a sample container;
a transport unit that transports a rack that can hold a plurality of sample containers, via the measurement unit;
a collection unit that is detachably provided with a tray in which a plurality of racks can be set, and that collects the rack transported from the measurement unit by the transport unit and sets the rack in the tray;
a storage that stores sample identification information of the sample, rack identification information of the rack, and tray identification information of the tray in association with each other;
an input part;
a display part; and
a controller that, in a condition in which the input part receives input of the sample identification information or the rack identification information, causes the display part to display the tray identification information stored in association with the inputted sample identification information or the inputted rack identification information, wherein
the storage stores measurement status information on a status of measurement of the sample in association with the sample identification information of the sample and the rack identification information of the rack which holds the sample container in which the sample is stored, and
in a condition in which the input part receives input of the measurement status information, the controller causes the display part to display the sample identification information, the rack identification information, and the tray identification information stored in the storage in association with the measurement status information.

**2.** (Amended) The sample measurement system according to claim 1, wherein
the storage stores setting position information on the rack in the tray in association with the sample identification information of the sample stored in the sample container held in the rack and the rack identification information of the rack, and
in a condition in which the input part receives the input of the sample identification information or the rack identification information, the controller causes the display part to display the tray identification information and the setting position information stored in the storage in association with the sample identification information or the rack identification information.

**3.** Cancelled)

**4.** (Amended) The sample measurement system according to claim 1, wherein
the measurement status information indicates whether re-measurement of the sample is necessary.

**5.** (Amended) The sample measurement system according to claim 1 or 4, wherein
the measurement status information indicates whether the sample has been measured by the measurement unit.

**6.** (Amended) The sample measurement system according to any one of claims 1, 4, and 5, further comprising
a sample identification information acquirer that acquires the sample identification information from a sample identifier, wherein the sample identifier is provided on the sample container and records the sample identification information, wherein
the measurement status information indicates whether an error has occurred when the sample identification information acquirer acquires the sample identification information.

**7.** (Amended) The sample measurement system according to any one of claims 1, 4, 5, and 6, wherein
the measurement unit that measures the sample based on an order assigned to the sample, and
the measurement status information indicates whether the order has been assigned to the sample.

**8.** (Amended) The sample measurement system according to any one of claims 1, 4, 5, 6, and 7, wherein
the collection unit selectively collects the rack transported by the transport unit according to the measurement status information associated with the rack identification information of the rack.

**9.** (Amended) The sample measurement system according to claim 2, wherein
in a condition in which the input part receives input of the setting position information, the controller causes the display part to display the sample identification information, the rack identification information, and the tray identification information stored in the storage in association with the setting position information.

**10.** (Amended) The sample measurement system according to any one of claims 1, 2, 4, 5, 6, 7, 8, and 9, wherein
in a condition in which the input part receives input of the tray identification information, the controller causes the display part to display the sample identification information and the rack identification information stored in the storage in association with the tray identification information.

**11.** (Amended) The sample measurement system according to any one of claims 1, 2, 4, and 5, further comprising
a rack identification information acquirer that acquires the rack identification information from a rack identifier, wherein the rack identifier is provided on the rack and records the rack identification information.

**12.** (Amended) The sample measurement system according to any one of claims 2, 4, 5, 6, 7, 8, 9, 10, and 11, wherein
the storage stores setting time information indicating a setting time of the rack in the tray in association with the sample identification information of the sample stored in the sample container held in the rack and the rack identification information of the rack, and
in a condition in which the input part receives input of the setting time information, the controller causes the display part to display the sample identification information, the rack identification information, and the tray identification information associated with the setting time information.

**13.** (Amended) The sample measurement system according to any one of claims 1, 2, 4, 5, 6, 7, 8, 9, 10, 11, and 12, wherein
the collection unit transport another rack set in the tray, and collects the rack transported by the transport unit.

**14.** (Amended) The sample measurement system according to any one of claims 1, 2, 4, 5, 6, 7, 8, 9, 10, 11, 12, and 13, comprising
the measurement unit comprises a plurality of measurement units, wherein the transport unit selectively transports the rack to a measurement unit of the plurality of measurement units.

**15.** (Amended) The sample measurement system according to any one of claims 1, 2, 4, 5, 6, 7, 8, 9, 10, 11, 12, 13 and 14, wherein
the tray is distinguishable by the tray identification information.

**16.** (Amended) A method of retrieving tray identification information of a tray which is detachably set in a collection unit and in which a rack is set, the rack being transported to the collection unit via a measurement unit for measuring a sample stored in a sample container held in the rack, the method comprising:
receiving input of sample identification information of the sample or rack identification information of the rack as a retrieval condition;
retrieving tray identification information associated with the received sample identification information or the received rack identification information;
displaying the retrieved tray identification information; and
in a condition in which input of measurement status information on a status of measurement of the sample is received as a retrieval condition, retrieving the sample identification information, the rack identification information, and the tray identification information which are associated with the received measurement status information, and displaying the sample identification information, the rack identification information, and the tray identification information which are retrieved.
